# EUROPÄISCHE PATENTSCHRIFT

(11) **EP 2 841 899 B1**
(45) Veröffentlichungstag und Bekanntmachung des Hinweises auf die Patenterteilung: **13.07.2016**
(21) Anmeldenummer: 13709934.7
(22) Anmeldetag: 19.03.2013
(51) Int. Cl.: G01L 9/00

(54) **DRUCKMESSAUFNEHMER**
PRESSURE SENSOR
CAPTEUR DE MESURE DE PRESSION

(30) Priorität: 24.04.2012 DE 102012103585
(43) Veröffentlichungstag der Anmeldung: 04.03.2015
(73) Patentinhaber: Endress+Hauser GmbH+Co. KG, 79689 Maulburg (DE)
(72) Erfinder: DREWES, Ulfert, 79379 Müllheim (DE); PONATH, Nils, 79539 Lörrach (DE); HÜGEL, Michael, 79541 Lörrach (DE); UEHLIN, Thomas, 79650 Schopfheim (DE)
(74) Vertreter: Andres, Angelika Maria
(86) Internationale Anmeldenummer: PCT/EP2013/055630
(87) Internationale Veröffentlichungsnummer: WO 2013/160019

(56) Entgegenhaltungen:
- EP-B1- 1 128 172
- DE-A1-102004 051 219

## Beschreibung

Die vorliegende Erfindung betrifft einen Druckmessaufnehmer. Gattungsgemäße Druckmessaufnehmer umfassen eine im wesentlichen zylindrische Druckmesszelle, ein im wesentlichen zylindrisches Gehäuse, und eine elektronische Schaltung, wobei die Druckmesszelle mindestens eine kreisscheibenförmige Messmembran und mindestens einen Gegenkörper aufweist, wobei zwischen der Messmembran und dem Gegenkörper eine erste Druckkammer gebildet ist, welche durch einen Druckkanal, der sich durch den Gegenkörper erstreckt, mit einem Druck beaufschlagbar ist, wobei die Druckmesszelle einen elektrischen Wandler zum Wandeln einer druckabhängigen Auslenkung der Messmembran in ein elektrisches Primärsignal aufweist; ein im wesentlichen zylindrisches Gehäuse, wobei das Gehäuse in seinem Inneren eine Messzellenkammer aufweist, wobei die Druckmesszelle in der Messzellenkammer angeordnet ist, wobei das Gehäuse an einer Stirnfläche eine Druckempfangsöffnung aufweist, wobei der Druckkanal der Druckmesszelle mit der Druckempfangsöffnung kommuniziert und über diese mit einem an der Druckempfangsöffnung anstehenden Mediendruck beaufschlagbar ist, und wobei die elektronische Schaltung zum Betreiben des elektrischen Wandlers der Druckmesszelle, und zum Verarbeiten des elektrischen Primärsignals vorgesehen ist, wobei die elektronische Schaltung in dem Gehäuse angeordnet und mit dem Wandler über mindestens eine Verbindungsleitung elektrisch verbunden ist.

Ein gattungsgemäßer Druckmessaufnehmer ist beispielsweise in dem Europäischen Patent EP 1 128 172 B1 offenbart. Der dort gezeigte Druckmessaufnehmer weist eine Druckmesszelle in einem Gehäuse auf, wobei die Druckmesszelle im wesentlichen koaxial zu dem Gehäuse ausgerichtet ist, und wobei die Druckkammer der Druckmesszelle über den Druckkanal und einen hydraulischen Pfad eines Druckmittlers mit einem Mediendruck beaufschlagbar ist. Die Druckmesszelle umfasst einen kapazitiven Wandler dessen Elektroden in der Druckkammer angeordnet und somit von der Übertragungsflüssigkeit umgeben sind. Dies schützt die Elektroden bei einer Verwendung des Druckmessaufnehmers als Relativdrucksensor vor Feuchteeinflüssen denen sie bei einer Anordnung außerhalb der Druckkammer ausgesetzt wären. Zumindest eine Elektrode des kapazitiven Wandlers, welche gegenüber der Messmembran an dem Gegenkörper angeordnet ist, ist über eine elektrische Durchführungen kontaktiert, die - ebenso wie der Druckkanal - an jener Stirnseite aus dem Gegenkörper austritt, die der Messmembran abgewandt und dem Druckmittler zugewandt ist.

Insofern, als die kapazitätsabhängigen Primärsignale empfindlich gegen Störungen sind, müssen die Primärsignale möglichst nahe an den Elektroden durch eine Vorverarbeitungsschaltung aufbereitet werden. Daher muss zwischen einem Druckmittlerkörper und dem der Druckmesszelle hinreichend Platz für eine solche Vorverarbeitungsschaltung vorgesehen sein. Außerdem muss zwischen der Mantelfläche der Druckmesszelle und der Gehäusewand hinreichend Platz bleiben um die Anschlussleitungen für die Vorverarbeitungsschaltung an der Druckmesszelle vorbei zu einer Hauptelektronik zu führen.

Daher muss bei einer gegebenen Größe der Druckmesszelle das Gehäuse hinreichend groß sein, oder bei einer gegebenen Gehäusegröße muss die Druckmesszelle hinreichend klein sein, um den obigen Anforderungen zu genügen.

Der vergrößerte Abstand zwischen der Druckmesszelle und dem Druckmittlerkörper, bewirkt zudem auf der damit einhergehenden größeren Menge an hydraulischer Übrtragungsflüssigkeit einen Beitrag zu einem temperaturabhängigen Messfehler. Zudem trägt er zu einem hydrostatischen Messfehler bei, der sowohl von der Lage als auch von der Temperatur abhängt.

Es ist daher die Aufgabe der vorliegenden Erfindung einen Druckmessaufnehmer bereitzustellen, der die beschriebenen Nachteile überwindet.

Die Aufgabe wird erfindungsgemäß gelöst durch den Druckmessaufnehmer gemäß dem unabhängigen Patentanspruch 1.

Der erfindungsgemäße Duckmessaufnehmer, umfasst eine im wesentlichen zylindrische Druckmesszelle; wobei die Druckmesszelle mindestens eine kreisscheibenförmige Messmembran und mindestens einen Gegenkörper aufweist, wobei zwischen der Messmembran und dem Gegenkörper eine erste Druckkammer gebildet ist, welche durch einen Druckkanal, der sich durch den Gegenkörper erstreckt, mit einem Druck beaufschlagbar ist, wobei die Druckmesszelle einen elektrischen Wandler zum Wandeln einer druckabhängigen Auslenkung der Messmembran in mindestens ein druckabhängiges, elektrisches Primärsignal aufweist, ein im wesentlichen zylindrisches Gehäuse, wobei das Gehäuse in seinem Inneren eine Messzellenkammer aufweist, wobei die Druckmesszelle in der Messzellenkammer angeordnet ist, wobei das Gehäuse an einer Stirnfläche eine Druckempfangsöffnung aufweist, wobei der Druckkanal der Druckmesszelle mit der Druckempfangsöffnung kommuniziert und über diese mit einem an der Druckempfangsöffnung anstehenden Mediendruck beaufschlagbar ist, und eine erste elektronische Schaltung zum Betreiben des elektrischen Wandlers der Druckmesszelle, und zum Verarbeiten des elektrischen Primärsignals, und zum Ausgeben eines vom Primärsignal abhängigen Messssignals, wobei die erste elektronische Schaltung in dem Gehäuse angeordnet und mit dem Wandler über mindestens eine Verbindungsleitung elektrisch verbunden ist, wobei erfindungsgemäß die Zylinderachse der Druckmesszelle mit der Zylinderachse des Gehäuses einen Winkel einschließt, der nicht weniger als 80° , bevorzugt nicht weniger als 85° beträgt, und der besonders bevorzugt ein rechter Winkel ist.

In einer Weiterbildung der Erfindung umfasst der Druckmessaufnehmer eine Trennmembran, welche an der Stirnseite des Gehäuses unter Bildung einer Druckempfangskammer zwischen dem Gehäuse und der Trennmembran entlang eines umlaufenden Randes druckdicht mit dem Gehäuse verbunden ist, wobei die Druckempfangsöffnung in die Druckempfangskammer mündet, und einen hydraulischen Pfad der sich von der Druckempfangskammer durch die Druckempfangsöffnung und den Druckkanal bis in die Druckkammer der Druckmesszelle erstreckt, um den an der Trennmembran anstehenden Druck in die Druckkammer zu übertragen.

In einer Weiterbildung der Erfindung ist der Wandler als kapazitiver Wandler gebildet ist und mindestens eine erste Elektrode aufweist, die an der Messmembran angeordnet ist, und mindestens eine zweite Elektrode, die an dem Gegenkörper angeordnet ist, wobei die Kapazität zwischen der ersten Elektrode und der zweiten Elektrode druckabhängig ist.

In einer Weiterbildung der Erfindung ist der Wandler über elektrische Durchführungen durch den Gegenkörper kontaktiert ist, wobei die elektrischen Durchführungen an einer der Messmembran abgewandten Stirnfläche des Gegenkörpers aus dem Grundkörper austreten.

In einer Weiterbildung der Erfindung tritt der Druckkanal ebenfalls an der der Messmembran abgewandten Stirnfläche des Gegenkörpers aus dem Gegenkörper.

In einer Weiterbildung der Erfindung umfasst der Druckmessaufnehmer weiterhin eine zweite elektronische Schaltung, welche an die erste elektronische Schaltung angeschlossen ist, um das Messssignal zu empfangen und zu verarbeiten, und welche auf der der Druckeingangsöffnung abgewandten Seite der Messzelle in dem Gehäuse angeordnet ist.

In einer Weiterbildung der Erfindung gibt die zweite elektronische Schaltung ein von dem Messssignal abhängiges Ausgangssignal an einen Signalausgang aus, wobei der Signalausgang an einen Signalpfad angeschlossen ist, wobei das Gehäuse eine Signalpfadöffnung aufweist, durch welche de Signalpfad verläuft.

In einer Weiterbildung der Erfindung ist die Signalpfadöffnung an der der Druckeingangsöffnung abgewandten Stirnseite des Gehäuses angeordnet.

In einer Weiterbildung der Erfindung umfasst die Druckmesszelle weiterhin einen zweiten Gegenkörper, wobei die Messmembran zwischen dem ersten Gegenkörper und dem zweiten Gegenkörper angeordnet ist, wobei zwischen der Messmembran und dem zweiten Gegenkörper eine zweite Druckkammer gebildet ist, wobei die zweite Druckkammer evakuiert ist oder über einen zweiten Druckkanal, der sich durch den zweiten Gegenkörper erstreckt, mit Atmosphärendruck beaufschlagbar ist.

In einer Weiterbildung der Erfindung beträgt der Außendurchmesser der Druckmesszelle insbesondere nicht weniger als 80% insbesondere nicht weniger als 90% des Außendurchmessers des Gehäuses in dem axialen Abschnitt der Messzellenkammer.

In einer Weiterbildung der Erfindung umfasst der Druckmessaufnehmer weiterhin einen Trägerkörper, wobei der Trägerkörper in dem Gehäuse angeordnet und mit dem Gehäuse drucktragend verbunden ist, wobei die Druckmesszelle von dem Trägerkörper gehalten wird und mit ihm drucktragend verbunden ist, wobei durch den Trägerkörper ein Verbindungskanal verläuft, der jeweils druckdicht an die Druckeingangsöffnung und an den Druckkanal angeschlossen ist.

In einer Weiterbildung der Erfindung weist der Verbindungskanal einen ersten Abschnitt und einen zweiten Abschnitt auf, die aneinander anschließen und miteinander kommunizierende Bohrungen in dem Trägerkörper umfassen, und im wesentlichen senkrecht zueinander verlaufen.

In einer Weiterbildung der Erfindung weist der Trägerkörper mindestens ein erstes zapfenförmiges Anschlussstück auf, durch welches der Verbindungskanal verläuft, wobei das Anschlussstück in einer Bohrung in dem Gegenkörper, durch welche der Druckkanal verläuft, angeordnet und drucktragend gefügt ist.

In einer Weiterbildung der Erfindung weist mindestens ein Gegenkörper an seiner der Messmembran abgewandten Stirnfläche zumindest abschnittsweise eine Fase auf, deren maximale Querschnittsfläche nicht weniger als 0,5% insbesondere nicht weniger als 2%, bevorzugt nicht weniger als 4%, und weiter bevorzugt nicht weniger als 6% des Quadrats der axialen Dimension des Gegenkörpers beträgt.

Die Erfindung wird nun anhand der in den Figuren gezeigten Ausführungsbeispiele erläutert. Es zeigt:
- Fig. 1a:: eine Explosionszeichen einiger Komponenten eines ersten Ausführungsbeispiels eines erfindungsgemäßen Druckmessaufnehmers;
- Fig. 1b:: eine räumliche Ansicht der Komponenten aus Fig. 1 a im zusammengebauten Zustand;
- Fig. 2a:: einen Längsschnitt durch ein zweites Ausführungsbeispiel eines erfindungsgemäßen Druckmessaufnehmers; und
- Fig. 2b:: einen Querschnitt durch das zweite Ausführungsbeispiel aus Fig. 2a.

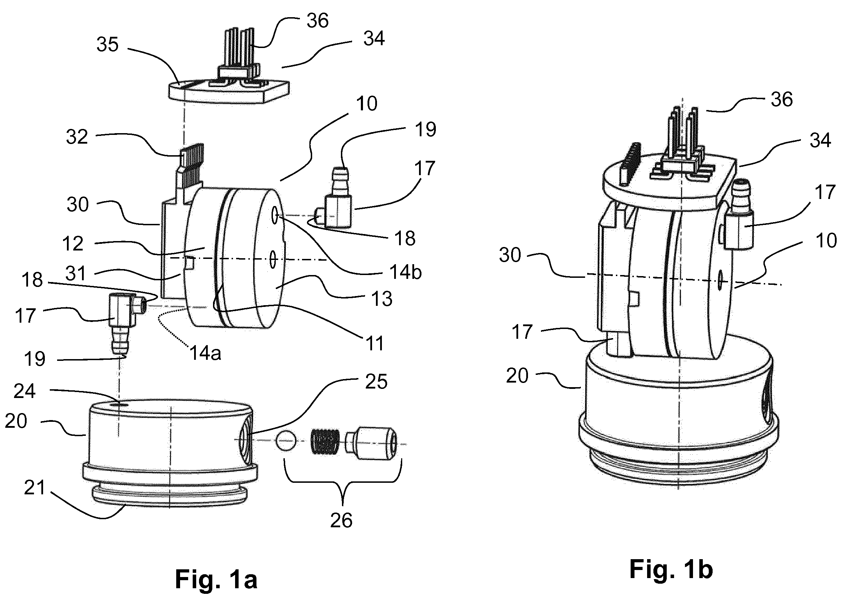

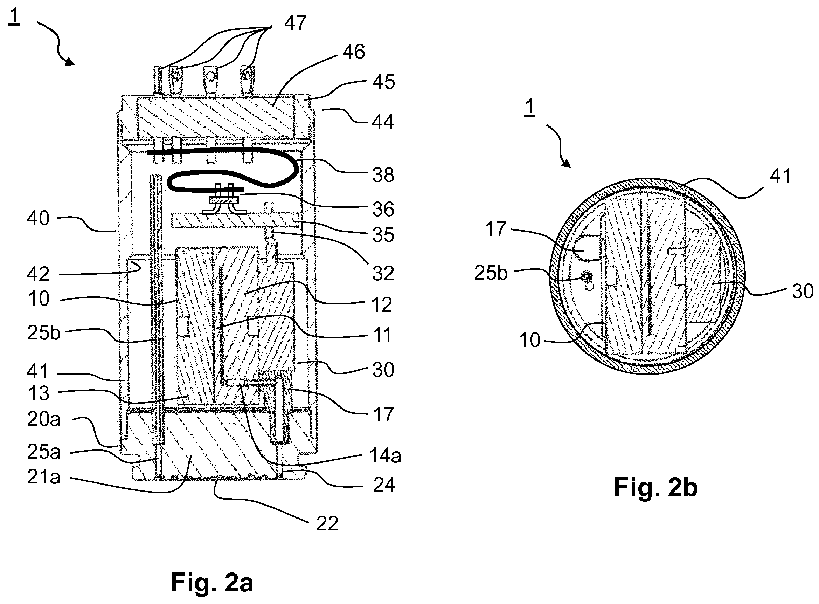

Zunächst werden eines ersten Ausführungsbeispiel der Erfindung anhand von Fign. 1 a und 1 b erläutert, wobei für die Anordnung der Komponenten im Druckmessaufnehmer gelegentlich vorgreifend auf Fign. 2a und 2b verwiesen wird.

Eine Druckmesszelle 10 des ersten Ausführungsbeispiels eines erfindungsgemäßen Druckmessaufnehmers umfasst eine kreisscheibenförmige Messmembran 11 sowie einen ersten und einen zweiten kreisplattenförmigen Gegenkörper 12, 13, welche eine Größere Biegesteifigkeit als die Messmembran 11 aufweisen. Die Gegenkörper 12, 13 und die Messmembran weisen einen keramischen Werkstoff auf, insbesondere Korund, wobei die Messmembran 11 jeweils mittels einer umlaufenden Fügestelle, die ein Aktivhartlot, insbesondere ein Zr-Ni-Ti-Aktivhartlot aufweist, mit den beiden Gegenkörpern druckdicht verbunden ist. Zwischen der Messmembran 11 und dem ersten Gegenkörper 12 ist eine erste Druckkammer gebildet, welche durch einen Druckkanal 14a (nur in Fig. 2a dargestellt), der sich durch den Gegenkörper 12 erstreckt, mit einem Druck beaufschlagbar ist. Entsprechend ist zwischen der Messmembran 11 und dem zweiten Gegenkörper 13 eine zweite Druckkammer gebildet, welche durch einen Druckkanal 14b, der sich durch den Gegenkörper 12 erstreckt, mit einem Druck beaufschlagbar ist. Die jeweilige Auslenkung Auslenkung der Messmembran 11 hängt von der Differenz zwischen dem Druck in der ersten Messkammer und in der zweiten Messkammer ab.

Die Druckmesszelle 10 umfasst weiterhin einen hier nicht im Detail dargestellten kapazitiven Wandler zum Wandeln der druckabhängigen Auslenkung der Messmembran 11 in mindestens ein druckabhängiges, elektrisches Primärsignal. Kapazitive Wandler sind vorzugsweise als Differentialkondensatoren mit mindestens zwei Kapazitäten unterschiedlicher Druckabhängigkeit realisiert, wobei die beiden Kapazitäten bei Druckgleichheit in beiden Druckkammern die gleiche Kapazität aufweisen sollen. Hierzu kann beispielsweise in beiden Druckkammern ein Elektrodenpaar angeordnet sein, von denen jeweils eine Elektrode an der Messmembran und eine Elektrode der Messmembran gegenüberliegend am Gegenkörper angeordnet ist. Dies ist eine gängige Wandlerschaltung für Differenzdruckmessaufnehmer, welche gewöhnlich eine vergleichsweise kleine Differenz zwischen zwei hohen statischen Drücken zu erfassen haben.

Die vorliegende Erfindung betrifft jedoch insbesondere Relativ- bzw. Absolutdruckmessaufnehmer, bei denen die Differenz zwischen einem Mediendruck und dem umgebenden Atmosphärendruck bzw. Vakuum zu erfassen ist. In diesem Fall umfasst der kapazitive Wandler vorzugsweise zwei Kapazitäten mit unterschiedlicher Druckabhängigkeit in derselben Druckkammer. Damit sind die Kapazitäten einheitlichen Umgebungsbedingungen ausgesetzt. Gängig sind hierzu eine Kreisflächenelektrode und eine Kreisringelektrode am Gegenkörper, wobei die Kreisringelektrode die Kreisflächenelektrode umgibt, und wobei deren Kapazität jeweils gegenüber einer vollflächigen Membranelektrode zu messen ist. Der kapazitive Wandler ist in der ersten Druckkammer angeordnet, welche mittels einer Übertragungsflüssigkeit mit einem Mediendruck beaufschlagt wird. Auf diese weise sind die Kapazitäten beispielsweise von Querempfindlichkeiten gegenüber der Luftfeuchtigkeit befreit.

Der Druckmessaufnehmer 1 umfasst weiterhin eine Druckmittlerbaugruppe 20 mit einem Druckmittlerkörper 21, welcher an einer ersten Stirnseite eine metallische Trennmembran 22 aufweist, die entlang eines umlaufenden Randes druckdicht mit dem Druckmittlerkörper verschweißt ist, wobei die Trennmembran eine Druckeingangsöffnung 24 überdeckt, die sich durch den Druckmittlerkörper 21 erstreckt.

Die Druckmesszelle 10 ist über ein Anschlussstück 17 an den Druckmittlerkörper angeschlossen, wobei das Anschlussstück 17 einen ersten Anschlusszapfen 18 mit einem ersten Zapfenkanal aufweist der in den ersten Druckkanal 14a des ersten Gegenkörpers 12 eingesetzt und mit dem Gegenkörper druckdicht gefügt ist.

Das Anschlussstück 17 weist weiterhin einen zweiten Anschlusszapfen 19 mit einem zweiten Zapfenkanal auf, wobei die Längsachsen der beiden Anschlusszapfen 18, 19 senkrecht zueinander verlaufen, wobei der zweite Anschlusszapfen 19 in die Druckeingangsöffnung 24 des Druckmittlerkörpers 21 eingesetzt und mit dem Druckmittlerkörper 21 druckdicht gefügt ist.

Das Anschlussstück 17 weist vorzugsweise einen Werkstoff auf, dessen Wärmeausdehnungskoeffizient mit dem Wärmeausdehnungskoeffizienten des Gegenkörpers kompatibel ist, beispielsweise Kovar. Bevorzugt weist das Anschlussstück den gleichen Werkstoff wie der Gegenkörper auf, nämlich Korund. Das Anschlussstück 17 positioniert die Druckmesszelle 10 bezüglich der Druckmittlerbaugruppe 20 und hält sie in der Position fest.

Über das Anschlussstück ist ein zwischen der Trennmembran 22 und der Messmembran 11 eingeschlossenes und druckdicht abgeschlossenes Volumen gebildet, welches einen hydraulischen Pfad definiert, über den die Messmembran mit dem an der Trennmembran 22 anstehenden Druck beaufschlagt werden kann.

Der hydraulische Pfad ist durch eine Öffnung 25 im Druckmittlerkörper 21, die sich von der Mantelfläche des Druckmittlerkörpers radial einwärts erstreckt und mit dem hydraulischen Pfad kommuniziert, mit einer Übertragungsflüssigkeit befüllt, wobei die Öffnung 25 nach der Befüllung mit einem Verschluss 26, der eine Dichtungskugel, eine Vorspannfeder und eine Madenschraube umfasst, druckdicht verschlossen ist.

In Fig. 2a ist anhand einer anderen Ausführung einer Druckmittlerbaugruppe 20a eine Alternative für die Gestaltung der Befüllöffnung gezeigt, bei dem sich eine Befüllöffnung 25a in axialer Richtung durch einen Druckmittierkörper 21a erstreckt, wobei in die Befüllöffnung 25a ein Kapillarrohr 25b eingesetzt und mit dem Druckmittlerkörper 21 a verlötet ist. Das Kapillarrohr 25b ist nach dem Befüllen des hydraulischen Pfades druckdicht zu verschließen, beispielsweise durch Kneifen und anschließenden Verschweißen des Kapillarrohres 25b. Abgesehen von dieser Variation entspricht das Ausführungsbeispiel der Fign. 2a und 2b im wesentlichen dem Ausführungsbeispiel aus Fign. 1a und 1 b.

Um die Druckmesszelle 10 als Relativdruckmesszelle zu betreiben, ist eine Referenzluftzufuhr erforderlich, wozu ein erster Anschlusszapfen eines zweiten Verbindungsstücks 17 in den Druckkanal 14b des zweien Gegenkörpers 13 eingesetzt und mit dem zweiten Gegenkörper 13 druckdicht gefügt ist. Der zweite Anschlusskörper ist im wesentlichen baugleich mit dem ersten Anschlusskörper 17, wobei an den zweiten Anschlusszapfen des zweiten Anschlusskörpers 17 eine (hier nicht dargestellte) Referenzluftleitung, beispielsweise ein Referenzluftschlauch angeschlossen ist.

In dem Gehäuse kann weiterhin ein Trocknungskörper angeordnet werden, der beispielsweise Zeolith oder Silicagel in einer organischen Matrix, die beispielsweise PFA, PTFE, Silicon oder andere Polymere aufweist. Geeignete Materialien für solche Trocknungskörper sind in den deutschen Patentanmeldungen mit den Aktenzeichen 102010038986, 102010062295 und 102011080142 beschrieben.

Der Druckmessaufnehmer umfasst weiterhin eine Schaltungsbaugruppe 30, welche eine elektronische Schaltung aufweist zum Betreiben des kapazitiven Wandlers, zum Verarbeiten der Primärsignale des kapazitiven Wandlers, und zum Ausgeben eines von den Primärsignalen abhängigen Messsignals. Das Messsignal kann insbesondere ein Digitalsignal sein. Die elektronische Schaltung ist in einer hermetisch dichten keramischen Kapsel 31 eingehaust, die wiederum an der äußeren Stirnseite des Gegenkörpers 12 angeordnet ist, wobei die elektronische Schaltung an die Elektroden des kapazitiven Wandlers über elektrische Durchführungen durch die Kapsel 31 und den ersten Gegenkörper 12 angeschlossen ist.

Die Schaltungsbaugruppe 30 weist weiterhin eine Reihe von ersten Kontaktstiften 32 auf, auf welche ein Anschlussmodul 34 aufgesteckt ist, welches eine Leiterplatte und zweite Kontaktstifte 36 in einem größeren Rastermaß als die ersten Kontaktstifte umfasst.

Für die weitere Beschreibung wird nun auf Fign. 2a und 2b verwiesen.

Der erfindungsgemäße Druckmessaufnehmer 1 umfasst weiterhin ein Gehäuse 40, welches ein zylindrisches, metallisches Gehäuserohr 41, den metallischen Druckmittlerkörper 21 als medienseitigen Gehäuseverschluss und weiterhin einen medienabgewandten Gehäuseverschluss 44 aufweist.
Das Gehäuserohr 40 ist auf den Druckmittlerköper 21 aufgesetzt und mit diesem entlang einer umlaufenden Schweißnaht druckdicht verschweißt,
wobei die dem Druckmittlerkörper 21 abgewandte Stirnseite des Gehäuserohrs 41 mit einem Gehäuseverschluss 44 dicht verschweißt ist, so dass das Gehäuse 40 eine geschlossene Messzellenkammer um die Druckmesszelle 10 und die Schaltungsbaugruppe 30 sowie das Anschlussmodul 34 bildet.

Der Gehäuseverschluss 44 wie eine metallische Manschette 45 auf, in welche ein Glaskörper 46 druckdicht und drucktragend eingelassen ist, wobei sich durch den Glaskörper Durchführungskontakte 47 und ein (hier nicht dargestellter) Referenzluftkanalrohr erstrecken.

Die Durchführungskontakte 47 sind über ein Flexleiterband 38 mit den zweiten Kontaktstiften 38 verbunden.

Das Referenzluftkanalrohr ist über einen Referenzluftschlauch an den zweiten Anschlusszapfen des zweiten Anschlussstücks 17 angeschlossen. Die genannten Komponenten des Referenzluftpfads sind jedoch im Sinne der Übersichtlichkeit in Fig. 2a nicht dargestellt.

Die Messzellenkammer kann ggf. mit einer weichen Vergussmasse oder einem Schaum gefüllt sein bzw. oder ein oder mehrere Kunststoffformteile enthalten, um ggf. auftretende Vibrationen der Messzelle 10 zu dämpfen.

Wie in Fig 2a dargestellt, umfasst der Innenradius des Gehäuserohrs 41 mindestens eine Stufe 42, so dass die Messzellenkammer in dem axialen Abschnitt, in welchem die Druckmesszelle 10 angeordnet ist, einen größeren Innendurchmesser aufweist oberhalb dieses axialen Abschnitts. Auf diese Weise wird der Druckmesszelle 10 hinreichend Raum gegeben, wie in dem Querschnitt in Fig. 2b dargestellt ist, der in der Ebene der größten Ausdehnung der Druckmesszelle verläuft.

Auf das Gehäuse 40 kann weiterhin auf ein hier nicht dargestelltes Elektronikgehäuse aufgesetzt werden, in dem eine so genannte Hauptelektronik angeordnet ist, welche die Schaltungsbaugruppe 30 mit Energie versorgt, und deren Signale aufbereitet, beispielsweise um ein messwertabhängiges Stromsignal (4 ... 20 mA) oder ein digitales Signal in einem der gängigen Feldbus-Protokolle bereitzustellen.

Ggf. kann die Hauptelektronik auch in das Gehäuse 40 integriert werden, wozu dann ein größeres Gehäusevolumen erforderlich ist, das beispielsweise durch Verlängern des Gehäuserohrs 41 bereitgestellt werden kann. In diesem Fall kann das Gehäuse 40 angrenzend an die Durchführung einen Klemmenblock im galvanischen Kontakt mit den Durchführungskontakten 47 tragen, wobei der Druckmessaufnehmer über den Klemmenblock an ein Leitsystem anzuschließen ist.

## Patentansprüche

1. Druckmessaufnehmer (1), umfassend:
eine im wesentlichen zylindrische Druckmesszelle (10),
wobei die Druckmesszelle mindestens eine kreisscheibenförmige Messmembran (11) und mindestens einen Gegenkörper (12) aufweist,
wobei zwischen der Messmembran (11) und dem Gegenkörper (12) eine erste Druckkammer gebildet ist, welche durch einen Druckkanal (14a), der sich durch den Gegenkörper erstreckt, mit einem Druck beaufschlagbar ist,
wobei die Druckmesszelle einen elektrischen Wandler zum Wandeln einer druckabhängigen Auslenkung der Messmembran in mindestens ein druckabhängiges, elektrisches Primärsignal aufweist,
ein im wesentlichen zylindrisches Gehäuse (40),
wobei das Gehäuse (40) in seinem Inneren eine Messzellenkammer aufweist,
wobei die Druckmesszelle (10) in der Messzellenkammer angeordnet ist,
wobei das Gehäuse an einer Stirnfläche eine Druckempfangsöffnung (24) aufweist,
wobei der Druckkanal (14a) der Druckmesszelle (10) mit der Druckempfangsöffnung (24) kommuniziert und über diese mit einem an der Druckempfangsöffnung anstehenden Mediendruck beaufschlagbar ist,
und eine erste elektronische Schaltung (31) zum Betreiben des elektrischen Wandlers der Druckmesszelle (10), und zum Verarbeiten des elektrischen Primärsignals, und zum Ausgeben eines vom Primärsignal abhängigen Messsignals,
wobei die erste elektronische Schaltung (31) in dem Gehäuse angeordnet und mit dem Wandler über mindestens eine Verbindungsleitung elektrisch verbunden ist,
**dadurch gekennzeichnet,**
**dass** die Zylinderachse der Druckmesszelle (10) mit der Zylinderachse des Gehäuses (40) einen Winkel einschließt, der nicht weniger als 80°, bevorzugt nicht weniger als 85° beträgt, und der besonders bevorzugt ein rechter Winkel ist.

2. Druckmessaufnehmer nach Anspruch 1, weiter umfassend:
eine Trennmembran, welche an der Stirnseite des Gehäuses unter Bildung einer Druckempfangskammer zwischen dem Gehäuse und der Trennmembran entlang eines umlaufenden Randes druckdicht mit dem Gehäuse verbunden ist, wobei die Druckempfangsöffnung in die Druckempfangskammer mündet, und
einen hydraulischen Pfad der sich von der Druckempfangskammer durch die Druckempfangsöffnung und den Druckkanal bis in die Druckkammer der Druckmesszelle erstreckt, um den an der Trennmembran anstehenden Druck in die Druckkammer zu übertragen.

3. Druckmessaufnehmer nach Anspruch 1 oder 2, wobei der Wandler als kapazitiver Wandler gebildet ist und mindestens eine erste Elektrode aufweist, die an der Messmembran angeordnet ist, und mindestens eine zweite Elektrode, die an dem Gegenkörper angeordnet ist, wobei die Kapazität zwischen der ersten Elektrode und der zweiten Elektrode druckabhängig ist.

4. Druckmessaufnehmer nach Anspruch 1, 2 oder 3, wobei der Wandler über elektrische Durchführungen durch den Gegenkörper kontaktiert ist, wobei die elektrischen Durchführungen an einer der Messmembran abgewandten Stirnfläche des Gegenkörpers aus dem Grundkörper austreten.

5. Druckmessaufnehmer nach Anspruch 4, wobei der Druckkanal ebenfalls an der der Messmembran abgewandten Stirnfläche des Gegenkörpers aus dem Gegenkörper austritt.

6. Druckmessaufnehmer nach einem der Ansprüche 1 bis 5, weiterhin umfassend, eine zweite elektronische Schaltung, welche an die erste elektronische Schaltung angeschlossen ist, um das Messssignal zu empfangen und zu verarbeiten, und welche auf der der Druckeingangsöffnung abgewandten Seite der Messzelle in dem Gehäuse angeordnet ist.

7. Druckmessaufnehmer nach einem der Ansprüche 1 bis 6, wobei die zweite elektronische Schaltung ein von dem Messssignal abhängiges Ausgangssignal an einen Signalausgang ausgibt, und wobei der Signalausgang an einen Signalpfad angeschlossen ist, wobei das Gehäuse eine Signalpfadöffnung aufweist, durch welche de Signalpfad verläuft.

8. Druckmessaufnehmer nach Anspruch 7, wobei die Signalpfadöffnung an der der Druckeingangsöffnung abgewandten Stirnseite des Gehäuses angeordnet ist.

9. Druckmessaufnehmer nach einem der vorhergehenden Ansprüche wobei die Druckmesszelle weiterhin einen zweiten Gegenkörper umfasst, und wobei die Messmembran zwischen dem ersten Gegenkörper und dem zweiten Gegenkörper angeordnet ist, wobei zwischen der Messmembran und dem zweiten Gegenkörper eine zweite Druckkammer gebildet ist, wobei die zweite Druckkammer evakuiert ist oder über einen zweiten Druckkanal, der sich durch den zweiten Gegenkörper erstreckt, mit Atmosphärendruck beaufschlagbar ist.

10. Druckmessaufnehmer nach einem der vorhergehenden Ansprüche wobei der Außendurchmesser der Druckmesszelle insbesondere nicht weniger als 80% insbesondere nicht weniger als 90% des Außendurchmessers des Gehäuses in dem axialen Abschnitt der Messzellenkammer beträgt.

11. Druckmessaufnehmer nach einem der vorhergehenden Ansprüche, weiterhin umfassend einen Trägerkörper,
wobei der Trägerkörper in dem Gehäuse angeordnet und mit dem Gehäuse drucktragend verbunden ist,
wobei die Druckmesszelle von dem Trägerkörper gehalten wird und mit ihm drucktragend verbunden ist, wobei durch den Trägerkörper ein Verbindungskanal verläuft, der jeweils druckdicht an die Druckeingangsöffnung und an den Druckkanal angeschlossen ist.

12. Druckmessaufnehmer nach einem der vorhergehenden Ansprüche, wobei der Verbindungskanal einen ersten Abschnitt und einen zweiten Abschnitt aufweist, die aneinander anschließen und miteinander kommunizierende Bohrungen in dem Trägerkörper umfassen, und im wesentlichen senkrecht zueinander verlaufen.

13. Druckmessaufnehmer nach einem der vorhergehenden Ansprüche, wobei der Trägerkörper mindestens ein erstes zapfenförmiges Anschlussstück durch welches der Verbindungskanal verläuft, wobei das Anschlussstück in einer Bohrung in dem Gegenkörper, durch welche der Druckkanal verläuft, angeordnet und drucktragend gefügt ist.

14. Druckmessaufnehmer nach einem der vorhergehenden Ansprüche, wobei mindestens ein Gegenkörper an seiner der Messmembran abgewandten Stirnfläche zumindest abschnittsweise eine Fase aufweist, deren maximale Querschnittsfläche nicht weniger als 0,5% insbesondere nicht weniger als 2%, bevorzugt nicht weniger als 4%, und weiter bevorzugt nicht weniger als 6% des Quadrats der axialen Dimension des Gegenkörpers beträgt.

## Claims

1. Pressure sensor (1), comprising:
an essentially cylindrical pressure measuring cell (10),
wherein the pressure measuring cell has at least one measuring diaphragm (11) in the shape of a disc and at least one counter-body (12),
wherein a first pressure chamber is formed between the measuring diaphragm (11) and the counter-body (12), wherein said first pressure chamber can be exposed to pressure via a pressure channel (14a) that extends through the counter-body,
wherein the pressure measuring cell has an electrical converter to convert a pressure-dependent deflection of the measuring diaphragm into at least one pressure-dependent, electrical primary signal,
an essentially cylindrical housing (40),
wherein the housing (40) has a measuring cell chamber on the inside,
wherein the pressure measuring cell (10) is arranged in the measuring cell chamber,
wherein the housing has a pressure reception opening (24) on a face,
wherein the pressure channel (14a) of the pressure measuring cell (10) communicates with the pressure reception opening (24) and can be exposed to a medium pressure present at the pressure reception opening via the pressure reception opening,
and a first electronic circuit (31) designed to operate the electrical converter of the pressure measuring cell (10), and to process the electrical primary signal, and to output a measuring signal that depends on the primary signal,
wherein the first electronic circuit (31) is arranged in the housing and is electrically connected to the converter via at least one connection line,
**characterized in that**
the cylindrical axis of the pressure measuring cell (10) incorporates, with the cylindrical axis of the housing (40), an angle that is not less than 80°, preferably not less than 85°, and most preferably is a right angle.

2. Pressure sensor as claimed in Claim 1, further comprising:
a process isolating diaphragm, which is connected in a pressure-tight manner to the housing along a circumferential edge at the level of the face of the housing, forming a pressure reception chamber between the housing and the process isolating diaphragm, wherein the pressure reception opening leads into the pressure reception chamber, and
a hydraulic path that extends from the pressure reception chamber through the pressure reception opening and the pressure channel and into the pressure chamber of the pressure measuring cell in order to transfer the pressure present at the process isolating diaphragm to the pressure chamber.

3. Pressure sensor as claimed in Claim 1 or 2, wherein the converter is formed as a capacitance converter and has at least a first electrode that is arranged on the measuring diaphragm, and at least a second electrode that is arranged on the counter-body, wherein the capacitance between the first electrode and the second electrode depends on the pressure.

4. Pressure sensor as claimed in Claim 1, 2 or 3, wherein the converter is contacted via electrical feedthroughs through the counter-body, wherein the electrical feedthroughs exit the meter body at a face of the counter-body facing away from the measuring diaphragm.

5. Pressure sensor as claimed in Claim 4, wherein the pressure channel also exits the counter-body at the face of the counter-body facing away from the measuring diaphragm.

6. Pressure sensor as claimed in one of the Claims 1 to 5, further comprising a second electronic circuit which is connected to the first electronic circuit in order to receive and process the measuring signal, and which is arranged in the housing on the side of the measuring cell facing away from the pressure input opening.

7. Pressure sensor as claimed in one of the Claims 1 to 6, wherein the second electronic circuit outputs an output signal, which depends on the measuring signal, to the signal output, and wherein the signal output is connected to a signal path, wherein the housing has a signal path opening through which the signal path extends.

8. Pressure sensor as claimed in Claim 7, wherein the signal path opening is arranged on the face of the housing facing away from the pressure input opening.

9. Pressure sensor as claimed in one of the previous claims, wherein the pressure measuring cell further comprises a second counter-body, and wherein the measuring diaphragm is arranged between the first counter-body and the second counter-body, wherein a second pressure chamber is formed between the measuring diaphragm and the second counter-body, wherein the second pressure chamber is evacuated or can be exposed to atmospheric pressure via a second pressure channel that extends through the second counter-body.

10. Pressure sensor as claimed in one of the previous claims, wherein the outer diameter of the pressure measuring cell particularly is not less than 80 %, notably not less than 90 % of the outer diameter of the housing in the axial section of the measuring cell chamber.

11. Pressure sensor as claimed in one of the previous claims, further comprising a support body, wherein the support body is arranged in the housing and is connected to the housing in a pressure-bearing manner,
wherein the pressure measuring cell is held by the support body and is connected to it in a pressure-bearing manner, wherein a connecting channel extends through the support body which is connected in a pressure-tight manner to both the pressure input opening and the pressure channel.

12. Pressure sensor as claimed in one of the previous claims, wherein the connecting channel has a first section and a second section that follow one another and comprise boreholes in the support body that communicate with one another and are essentially perpendicular to one another.

13. Pressure sensor as claimed in one of the previous claims, wherein the support body has at least a first cone-shaped connection piece through which the connecting channel extends, wherein the connection piece is arranged and joined in a pressure-bearing manner in a borehole in the counter-body through which the pressure channel extends.

14. Pressure sensor as claimed in one of the previous claims, wherein at least one counter-body has a chamfer at least in sections on its face that faces away from the measuring diaphragm, the maximum cross-sectional area of said chamfer being not less than 0.5%, particularly not less than 2%, preferably not less than 4%, and more preferably not less than 6% of the square of the axial dimension of the counter-body.

## Revendications

1. Capteur de pression (1), comprenant :
une cellule de mesure de pression (10) pour l'essentiel cylindrique,
la cellule de mesure de pression comportant au moins une membrane de mesure (11) en forme de disque et au moins un contre-corps (12),
pour lequel est formée, entre la membrane de mesure (11) et le contre-corps (12),
une première chambre de pression, laquelle peut être soumise à une pression par l'intermédiaire d'un canal de pression (14a), qui s'étend à travers le contre-corps,
pour lequel la cellule de mesure de pression comporte un transducteur électrique destiné à convertir une déviation fonction de la pression de la membrane de mesure en au moins un signal primaire électrique fonction de la pression,
un boîtier (40) pour l'essentiel cylindrique,
le boîtier (40) comportant en son intérieur une chambre de cellule de mesure,
pour lequel la cellule de mesure de pression (10) est disposée dans la chambre de cellule de mesure,
pour lequel le boîtier présente sur une surface frontale une ouverture de réception de pression (24),
pour lequel le canal de pression (14a) de la cellule de mesure de pression (10) communique avec l'ouverture de réception de pression (24) et peut être alimenté par l'intermédiaire de celle-ci avec une pression de fluide présente au niveau de l'ouverture de réception de pression,
et un premier circuit électronique (31) destiné à la commande du transducteur électrique de la cellule de mesure de pression (10), au traitement du signal primaire électrique ainsi qu'à la sortie du signal de mesure fonction du signal primaire,
le premier circuit électronique (31) étant disposé dans le boîtier et relié électriquement avec le transducteur au moyen d'au moins un câble de liaison,
**caractérisé**
**en ce que** l'axe de cylindre de la cellule de mesure de pression (10) inclut, avec l'axe de cylindre du boîtier (40) un angle, qui n'est pas inférieur à 80°, de préférence pas inférieur à 85°, et plus particulièrement de préférence est un angle droit.

2. Capteur de pression selon la revendication 1, comprenant en outre :
une membrane de séparation, laquelle est reliée de façon étanche à la pression avec le boîtier, au niveau de la face frontale du boîtier en formant une chambre de réception de pression entre le boîtier et la membrane de mesure le long d'un bord périphérique, l'ouverture de réception de pression aboutissant dans la chambre de réception de pression, et
un chemin hydraulique, qui s'étend de la chambre de réception de pression à travers l'ouverture de réception de pression et le canal de pression jusque dans la chambre de pression de la cellule de mesure de pression, afin de transmettre dans la chambre de pression la pression appliquée à la membrane de mesure.

3. Capteur selon la revendication 1 ou 2, pour lequel le transducteur est conçu en tant que transducteur capacitif et comporte au moins une première électrode, qui est disposée sur la membrane de mesure, et au moins une deuxième électrode, qui est disposée sur le contre-corps, la capacité entre la première électrode et la deuxième électrode étant fonction de la pression.

4. Capteur selon la revendication 1, 2 ou 3, pour lequel le transducteur est connecté par l'intermédiaire de traversées électriques à travers le contre-corps, les traversées électriques sortant du contre-corps au niveau d'une surface frontale du contre-corps située à l'opposé de la membrane de mesure.

5. Capteur selon la revendication 4, pour lequel le canal de pression sort également au niveau de la surface frontale du contre-corps située à l'opposé de la membrane de mesure.

6. Capteur selon l'une des revendications 1 à 5, comprenant en outre un deuxième circuit électronique relié au première circuit électronique, lequel deuxième circuit est destiné à recevoir et à traiter le signal de mesure, et lequel est disposé dans le boîtier, sur le côté de la cellule de mesure situé à l'opposé de l'ouverture d'entrée de pression.

7. Capteur selon l'une des revendications 1 à 6, pour lequel le deuxième circuit électronique fournit au niveau d'une sortie de signalisation un signal de sortie fonction du signal de mesure, la sortie de signalisation étant raccordée à un chemin de signal, le boîtier présentant une ouverture de chemin de signal, parcourue par le chemin de signal.

8. Capteur selon la revendication 7, pour lequel l'ouverture de chemin de signal est disposée sur la face frontale du boîtier située à l'opposé de l'ouverture d'entrée de pression.

9. Capteur selon l'une des revendications précédentes, pour lequel la cellule de mesure de pression comprend en outre un deuxième contre-corps, et pour lequel la cellule de mesure de pression est disposée entre le premier contre-corps et le deuxième contre-corps, une deuxième chambre de pression étant formée entre la membrane de mesure et le deuxième contre-corps, la deuxième chambre de pression étant mise au vide ou pouvant être mise à la pression atmosphérique par l'intermédiaire d'un deuxième canal de pression, qui s'étend à travers le deuxième contre-corps.

10. Capteur selon l'une des revendications précédentes, pour lequel le diamètre extérieur de la cellule de mesure de pression n'est pas inférieur à 80 %, notamment pas inférieur à 90 % du diamètre extérieur du boîtier dans la section axiale de la chambre de cellule de mesure.

11. Capteur selon l'une des revendications précédentes, comprenant en outre un
corps support, le corps support étant disposé dans le boîtier et relié avec le boîtier de manière à supporter la pression,
pour lequel la cellule de mesure de pression est maintenue par le corps support et est reliée avec lui de manière à supporter la pression, le corps support étant traversé par un canal de liaison qui est raccordé de façon étanche à la pression, respectivement à l'ouverture d'entrée de pression et au canal de pression.

12. Capteur selon l'une des revendications précédentes, pour lequel le canal de liaison présente une première section et une deuxième section, qui sont contiguës et comportent dans le corps support des alésages communiquant entre eux, et s'étendent pour l'essentiel perpendiculairement l'une par rapport l'autre.

13. Capteur selon l'une des revendications précédentes, pour lequel le corps support comporte au moins une première pièce de raccordement en forme de tenon, à travers laquelle s'étend le canal de liaison, la pièce de raccordement étant disposée dans un alésage du contre-corps, à travers lequel s'étend le canal de pression, et assemblée de façon à supporter la pression.

14. Capteur selon l'une des revendications précédentes, pour lequel au moins un contre-corps présente au moins partiellement sur sa face frontale située à l'opposé de la membrane de mesure, un chanfrein dont la section maximale n'est pas inférieure à 0,5 %, notamment pas inférieure à 2 %, de préférence pas inférieure à 4 %, et particulièrement de préférence pas inférieure à 6 % du carré de la dimension axiale du contre-corps.
